# EUROPEAN PATENT APPLICATION

(11) **EP 2 056 084 A1**
(43) Date of publication of application: **06.05.2009**
(21) Application number: 07021086.9
(22) Date of filing: 29.10.2007
(51) Int. Cl.: G01L 1/16, G01L 9/00

(54) **Package for a strain sensor**

(71) Applicant: Schott AG, 55122 Mainz (DE); Transense Technologies PLC, Bicester, Oxfordshire OX25 5HD (GB)
(72) Inventor: Fink, Thomas, Dipl.-Ing., 84028 Landshut (DE); Lohr, Raymond, Dr., Bucks HP18 9 AA (GB)
(74) Representative: Sawodny, Michael-Wolfgang

(57) **Abstract**

The invention relates to a package for a strain sensor. The package is comprising a base part (10) from a strain hardened material, a central part (20) from an annealed material and a lid part (30), wherein the base part, the central part and the lid part are made from austenitic stainless steel as well as a method for producing such a package.

## Description

The invention relates to a package for a strain sensor.

Many applications call for strain measurement including static and dynamic loading of structures and components and for the subsequent derivation of information from such measurement. From US 5,585,571 a method and apparatus for measuring strain has been made known. The method and apparatus for measuring strain as described in US 5,585,571 is based on a so called **s**urface **a**custic **w**ave resonator (SAW-resonator).

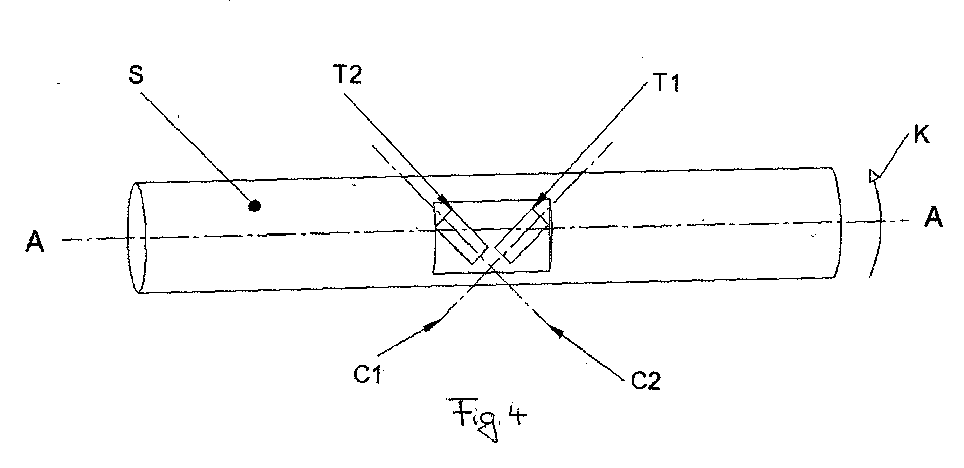

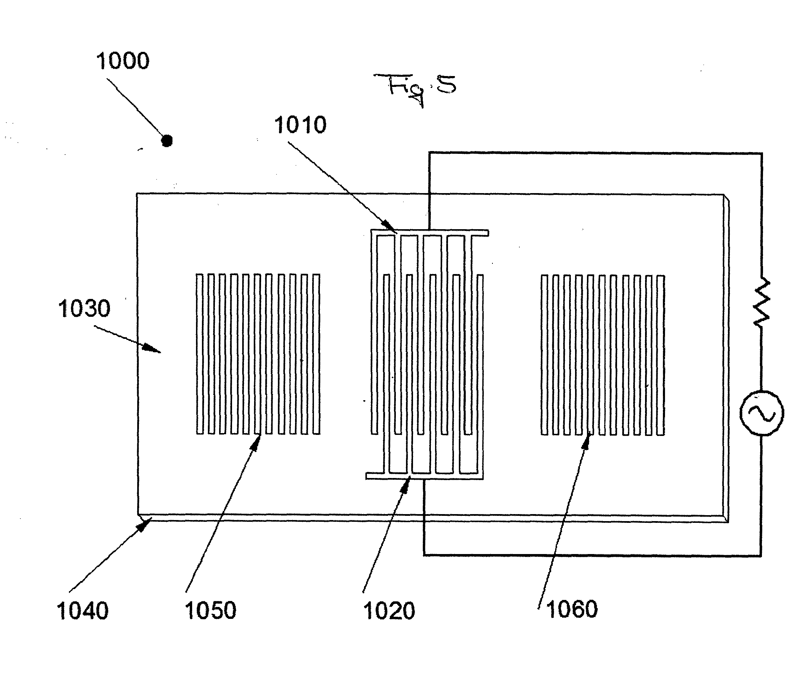

Such a resonator is made up of a microstructure deposited on a piezoelectric substrate. The microstructure is formed by at least one pair of interleaved comb-like ("interdigitated") electrodes deposited as a thin metal conducting layer on a substrate. In figures 4 and 5 of the application a basic model of a one port surface acoustic wave resonator used as a strain sensor is shown.

The strain sensor on basis of a surface acoustic wave (SAW) resonator is described now in further detail. The resonator has at least one interdigital transducer (IDT) with two electrical terminals and it may also contain two reflecting periodic gratings positioned one on each side of the transducer. The RF signal from the signal source applied to the IDT terminal excites surface acoustic waves propagating in opposite directions. As a result of reflections of SAW from the gratings a resonance with a very high quality (Q) factor (of the order of 10000) occurs at the frequency of several hundred megahertz. The resonant frequency of the SAW resonator can be measured in a contactless way by an electronic interrogation unit. In the event that the substrate of the SAW resonator is subject to strain, the periods of the gratings and the IDT change and the SAW propagation velocity also changes proportionally to the strain value. As a result the resonant frequency also changes proportionally to the strain. By measuring the change in the SAW resonant frequency one can measure the strain. The SAW strain sensing element may contain several electrically connected SAW resonators in order to exclude or compensate influence of temperature, variation of electric parameters of the RF communication channel and some undesirable mechanical forces. In particular, when measuring torque applied to a shaft by means of measuring shear strain components on its surface, there may be two SAW resonators positioned on a single substrate at 45° to the shaft axis. In this case the difference between the two resonant frequencies is proportional to the torque value.

A third SAW resonator may also be positioned on the same single substrate in order to sense temperature, thereby permitting temperature compensated torque to be determined from a single SAW sensor.

The operational frequencies of an SAW resonator can be selected in a wide frequency range extending from a few megahertz up to a few gigahertz.

The SAW resonator can be operated in many different modes as described for example in US 5,585,571 whose content is fully enclosed in this application by reference.

The choice of the operating mode depends on the strain measurement which should be undertaken.

In order to prevent the SAW substrate from environmental harm the SAW substrate should be enclosed within a hermetic package. According to the state of the art, SAW substrates are packaged in hermetic packages consisting of two pieces made from materials such as austenitic stainless steel. The packages consisting of two pieces, a flat base part and a top head part are assembled together for example by welding. The packages furthermore also have an electrical leadthrough which is made hermetic by use of glass fritted seal. The glass fritted seal functions either by a difference in the expansion coefficient known as a compression seal or by bonding to preoxidized surface layer known as a matched seal. The compression seal is normally used in austenitic stainless steel packages, whereas the matched seal is used in KOVAR-packages.

In the state of the art the SAW substrate used in a strain sensor is die bonded to the base part of the package. The base part is then bonded to the component from which the strain should be determined. For determining the strain it is necessary, that the strain is transferred from the component via the base part onto which the SAW substrate is bonded to the SAW resonator or resonators elastically, i.e. without hysteresis, plastic or creep deformation.

The two piece packages suffer from the problem, that they have poor elastic properties or that the glass fritted compression seal, through which the leadthroughs are guided, cracks.

It is therefore an object of the invention to provide a package for a strain sensor which avoids the disadvantages mentioned in the state of the art.

The problems are solved by a package which consists of at least three elements or parts, a base part, a central part and a lid part, wherein the central part is made from an annealed material and the base part is made from a material with good elastic properties. Materials of good elastic properties for the base part are materials having an approximately linear elasticity and a high yield strain preferably more than 1000 microstrain, most preferably more than 2500 microstrain, for example strain hardened austenitic stainless steel, ferritic steel (e.g. Sandvik 1802), cold rolled steel; KOVAR, NiFe alloys hardened martensitic stainless steels (e.g. EN 56 C) or precipitation hardened stainless steels (e.g. 17-4 PH).

In a preferred embodiment the base part consists of strain hardened austenitic stainless steel. In a more preferred embodiment the central part is made from annealed austenitic stainless steel. The lid part can be made either from strain hardened stainless steel or from annealed stainless steel.

In the most preferred embodiment all three parts can be made of the same material, for example the base part, the central part and the lid part can be made from austenitic stainless steel.

Most preferred austenitic stainless steel is e.g. AISI 304 and AISI 316 austenitic stainless steel. Most preferred is austenitic stainless steel with a low carbon content, such AISI 304L or AISI 316L. These austenitic stainless steels provide for better properties for laser-welding.

By dividing the package for a strain sensor in three parts, it is possible, to glass frit the electrical leadthrough in form for example of a compression seal at elevated temperatures without affecting the elastic properties of the base part onto which the SAW substrate is mounted.

By first manufacturing the central part with the glass fritted compression seal at high temperatures of approximately. 1000° C, the glass fritted compression seal can be manufactured in a temperature range preferably between 800°C and 1100°C, preferred between 900°C and 1050°C, most preferred between 950°C and 1020°C. A steel which is temperature processed in this temperature region is a so called annealed steel.

Since only the central part is annealed, only this central part made from austenitic stainless steel loses its elastic properties, whereas the elastic properties of the base part made of austenitic stainless steel can be kept because it is not annealed and therefore the properties of the cold worked (strain hardened) austenitic stainless steel is kept. Since the base part consists of a cold worked (strain hardened) austenitic stainless steel, the SAW substrate can be mounted onto the base part and the strain from outside of the package is transferred to the SAW resonator or resonators via the austenitic base part elastically, i.e. without hysteresis, plastic or creep deformation.

The use of austenitic stainless steel as a package material provides for high resistance to oxidation and corrosion. Furthermore, austenitic stainless steel provides for a package material which can be joined successfully together by welding or bonding. Furthermore, the use of austenitic stainless steel as material for the package provides hermetic electrical leadthroughs, when used together with a compression or a matched glass fritt sealing technique.

Between a temperature range from -40° C to 150° C, the austenitic stainless steel can provide a high elastic yield strain of >2500 microstrain as a cold worked material.

The invention not only provides for an improved package for a strain sensor consisting of at least three parts with the central part comprising the leadthroughs but also for an improved method of producing a package for a strain sensor, having at least a base part, a central part and a lid part.

According to the inventive method in the first step of producing the hermetic package, the leadthrough is glass fritted to the central part for example by a temperature of approximately more than 1000° C providing for a compression seal due to differences of the expansion coefficient of the glass material and the austenitic stainless steel material.

After the leadthrough is glass fritted to the central part at a high temperature, the central part is attached to the base part at much lower temperatures for example by bonding or welding. Preferred welding processes are resistance welding, laser welding, electron beam welding or seam welding. The base part is normally a flat base material. If the central part is attached to the base part by welding then one has to ensure, that the heat affected zone due to the weld is small and does not extend into the region of the base part, in which the SAW-resonator should be mounted.

After the central part is attached, retrospectively connected to the base part by bonding or welding, the SAW substrate is mounted on to the base part. For mounting the SAW substrate (a piezo-electric die) on to the base part a high strength, high glass transition temperature (Tg), adhesive is used to ensure low hysteresis and low creep. After the SAW substrate is mounted on to the base part, the SAW resonator or resonators are electrically connected to the electrical leadthroughs, for example by a gold wire bonding process.
After the aforementioned steps are competed, the package is closed by attaching the lid part to the central part. The SAW substrate, including SAW resonators, is then totally encapsulated in a hermetic way.

The invention should now be described with regard to the pictures. The pictures are only embodiments of the invention. The invention is not restricted to the embodiments shown in the figures. The figures show:
- Fig. 1: an exploded view of a package according to the invention;
- Fig. 2: a first embodiment of a package according to the invention;
- Fig. 3: a second embodiment of the invention;
- Fig. 4: an embodiment of a SAW-sensor for measuring a torque
- Fig. 5: a schematic of a one port resonator.

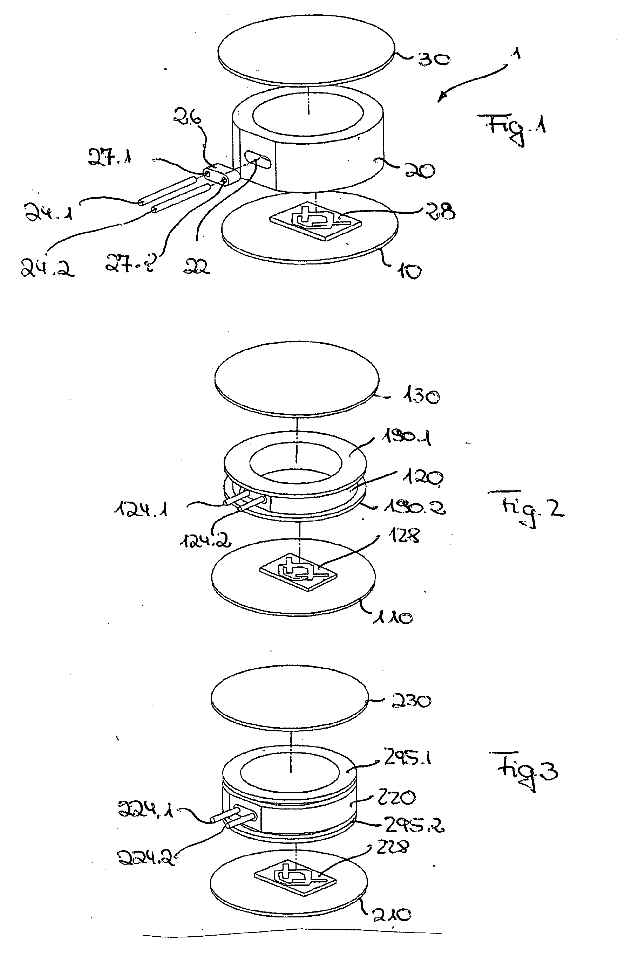

Fig. 1 shows an exploded view of the different parts of a package for a strain sensor according to the invention.

The package comprises three main parts, a base part 10 which is shown in the embodiment as a flat base plate, a central part 20 which is shown in the embodiment in a ring shaped form and a lid part or an upper part 30.

The base part 10 has to be made from a material with linear elastic behaviour and a high yield strain in order to ensure a linear response from the sensor with minimal hysteresis and creep.

The central part 20 requires a material suitable for glass fritting which involves temperatures over 1000°C. Such temperatures will anneal out (substantially reduce) the elastic range of ferritic / martensitic steels induced by hardening and tempering or of austenitic steels by cold working. In addition the material of the central part must be readily weldable or bondable to the base part.

If the central and base parts were not separate, the elastic range of the base of the package would be reduced unacceptably by the glass fritting process and the performance of the sensor as a whole compromised.

The lid part 30 must be readily weldable or bondable to the central part.

Preferably the base, central and lid parts should be made of materials with similar thermal expansion coefficient (CTE), and good resistance to oxidation and corrosion.

Preferably the thickness of the base and lid parts and the wall thickness of the central part should be as thin as practically possible, e. g. 0.1 to 1 mm and preferably 0.2 to 0.6 mm, in order to reduce the mechanical stiffness of the package. Reducing the package stiffness reduces the stress level in the bonded or welded connection between the package and the component on which the strain is to be measured, which benefits the durability of the SAW sensor system.

The base part 10, the central part 20 as well as the lid part 30 are all made in a most preferred embodiment of the same material, which is most preferred austenitic stainless steel, for example austenitic stainless steel AISI 304. The central part 20 is annealed austenitic stainless steal, whereas the base part is a cold worked austenitic stainless steel The annealed austenitic stainless steel is ideal for glass fritting, whereas the cold worked austenitic stainless steel has a high yield strain. Such an embodiment consisting mainly from austenitic steel provides for similar thermal expansion coefficient (CTE) for all different parts of the package.

The use of the same material for all parts of the hermetic package has the benefit that for all package elements a common coefficient of thermal expansion (CTE) with good oxidation and corrosion resistance properties results.

The central part 20 of the package 1 comprises an opening 22 for the leadthroughs 24.1, 24.2 from the outside of the package into its interior.

In the opening 22 a glass part 26 is introduced. The glass part 26 has the same form as the opening 22 of the central part. Furthermore, the glass part comprises two openings 28.1, 28.2 through which the leadthroughs 24.1, 24.2 are fed.

After the glass part together with the lead through is introduced into the opening of the central part, the central part is heated to a high temperature of around 1000° C. Due to the difference in the expansion coefficient between the material of the central part and the glass fritt material when cooled from the high temperature of around 1000° C down to room temperature, a hermetic seal of the leadthrough, the glass part and the central part is reached. Such a glass fritted seal is known as a compression seal.

After the central part 20 has been produced, there are in principle two alternatives to further proceed with fabrication of the package.

The first alternative is to attach the central part 20 to the base part 10 and thereby form an intermediate assembly. The attachment of the central part 20 to the base part 10 can be made by different techniques. A first alternative is welding with a suitable process like laser welding. Another technique is the bonding technique.

Both techniques are well known for a person skilled in the art. Apart from laser welding there is also the possibility of resistance welding, press-fit welding and cold welding. Also soldering would be possible. The interconnection of the central part 20 to the base part 10 by welding techniques, bonding techniques or soldering leads to a hermetic interconnection or attachment which is also vacuum tight.

After the central part 20 including leadthoughs is attached to the base part, the SAW substrate (typically crystalline quartz) incorporating up to three SAW resonators is bonded to the base part 10. The base part 10 can be then bonded to the component for which the strain should be determined. The strain on the mating surface of the mechanical component which is the result of direct loading of the component, e.g. by tension, compression, bending or torque or the result of a temperature change should be transferred to the SAW substrate elastically, i.e. without hysteresis, plastic or creep deformation.

Therefore a base plate which also consists of austenitic stainless steel has to be cold worked to have the elastic properties required for the transfer of the strain from the component via the base plate into the SAW substrate.

In order to attach the SAW substrate to the base plate 10, a high glass transition temperature (T_{g}) adhesive is utilised to ensure low hysteresis and creep.

The principle of measuring torque by sensing the principal tensile and compressive strains at ± 45° to the axis on the surface of a cylindrical shaft is shown in fig. 4.

A schematic of a SAW resonator is provided in fig. 5.

After the SAW substrate is mounted onto the base plate, the SAW resonator or resonators are electrically connected to the leadthrough by a gold wire bonding process (not shown). Instead of bonding the SAW resonators to the leadthrough by bonding with gold wire, also aluminium wire can be used.

After the SAW resonators are wire-bonded to the leadthroughs the package is completed by bonding or welding the lid part 30 to the assembly consisting of base part 10 and central part 20.

In a second possibility of manufacturing the package, it is possible, to first mount the SAW substrate onto the base plate and then interconnect the base plate 10, with the SAW substrate mounted, to the central part 20.

After the process steps described above have been performed, the lid-part 30 is attached to the assembly consisting of the base part 10, the central part 20 and the SAW substrate mounted on the base plate by one of the known conventional processes such as bonding, welding or soldering. These processes are well known to the men skilled in the art. By connecting the lid-part to the assembly a hermetic seal is provided.

The lid-part 30 preferably is made from austenitic stainless steel.

In a further embodiment a two part electronic package would be possible. In such a case the central part 20 and the lid part 30 would form one part (not shown). This one part consisting of central part 20 and lid part 30 would comprise the leadthroughs and consist of a material with good glass fritting capability such as annealed austenitic stainless steel. The other part of such a two-part system would consist of the base part 10 made from a material with good elastic properties (high yield strain) such as cold worked austenitic stainless steel.

As a result, the SAW substrate is encapsulated completely hermetically in the interior of the package.

In figure 2 a first embodiment of the invention is shown. All parts which correspond to similar parts in figure 1 are denoted with the same reference number plus 100.

In the embodiment shown in figure 2, the central part 120 comprises two flanges 190.1, 190.2. The two flanges 190.1, 190.2 are used in an welding process, to interconnect the base part 110 as well as the lid part 130 to the central part 120. If for welding a laser welding process is used, the heat affected zone due to the weld is small and does not extend to the region in which the SAW-sensor (128) is attached to the base part 110.

The lid-part 130 consists as the central part 120 of a material readily weldable or bondable and with good resistance to oxidation and corrosion such as e.g. an austenitic stainless steel, wherein the austenitic stainless steel is an annealed material.

As already explained above the base part 110 is made of a material with good elastic properties such as for example cold rolled (strain hardened) austenitic stainless steel with a high elastic limit.

In figure 3 an alternative embodiment of the package according to the invention is shown. Identical parts as in figure 1 and 2 are denoted by the same reference numbers plus 200.

Instead of the flanges the central part 220 shown in figure 3 has only an upper ring 295.1 and a lower ring 295.2 with a contour identical to the contour of the central part (280). In the embodiment shown in figure 3 the central part is connected to the lid part 230 and the base part 210 by bonding. In the embodiment shown in figure 3 the central part 220 is an annular component with a pair of circumferential slots which are sufficiently deep to provide both thermal and mechanical decoupling. Such an embodiment has the advantage, that the central part is thermally decoupled from the area in which the bonding is performed. Therefore when welding e.g. the base part and/or the lid part to the central part a lower amount of energy is needed for laser welding. Furthermore also the central part is mechanically decoupled from the base part 10.

In figure 4, the principal of a torque-measurement with two SAW-resonator transducers T1 and T2 mounted on the shaft S are shown. The centrelines C1 and C2 are located at 45 degrees to the longitudinal axes A of the shaft S from which the torque should be measured. Furthermore the centrelines C1 and C2 are at right angles to one another. The torque applied to the shaft in clockwise direction shown by the arrow K in figure 4 will induce compressive strain in transducer T1 and tensile strain in transducer T2. Any temperature change would apply equally to both elements. If the geometry of the transducers T1, T2 is changed for example by a torque, then the difference frequency between the SAW resonators arising from the change in shape can be measured. This is extensively described for example in US Patent US 5,585,571, whose disclosure content is fully enclosed in this application.

In figure 5 a detailed embodiment of a SAW-strain sensor, a so called SAW-resonator (Surface Acoustic Wave Resonator) is shown. Such a resonator 1000 is made up of a conducting thin-film microstructure. Normally an aluminium film with a thickness of the order of 100 nm is used. The microstructure is formed by at least one interdigital transducer (IDT) consisting of two comb-like electrodes 1010 and 1020 deposited on the upper surface 1030 of a piezoelectric substrate 1040. The substrate can be made of a number of materials from flexible plastic polymers to hard materials such as ceramics, quartz, lithium niobate etc. Apart from the IDT, the microstructure may also contain two reflective gratings 1050 and 1060 positioned on each side of the transducer. The gratings consist of a number of periodically spaced reflecting elements (either thin metal strips or shallow grooves). The gratings enhance reflections of the SAW generated by the IDT and hence improve the quality (Q) factor of the resonator.

With the invention for the first time a package for a SAW-strain sensor consisting of three parts is provided. The package according to the invention is made of a single material and has therefore a common thermal expansion coefficient for all package elements. Furthermore it has good oxidation and corrosion resistance properties. The package according to the invention can comprise conventionally fritted compression seals made of a glass material with a low thermal expansion coefficient between 9,6 x 10⁻⁶ 1/K to 5,0 x 10⁻⁶ 1/K. The expansion coefficient is given with regard to a temperature range from 20 °C to 300° C according to DIN 52328.

Furthermore, the package provides for an elastic strain transfer from a structural component such as an automotive flexplate or driveshaft to the SAW strain sensor.

The SAW strain sensor according to the invention can be used in various fields such as torque sensors. The strain sensor according to the invention comprises the SAW substrate, including SAW resonator(s), and the hermetic package.

The invention provides for a small size strain sensor which has a low sensitivity for magnetic fields. Furthermore it provide for an extraordinary precision of measurements of static and dynamic loads.

## Claims

1. Package for a strain sensor comprising:
a base part (10) with good elastic properties
a central part (20)
a lid part (30)

2. Package for a strain sensor according to claim 1,
wherein said base part has a high yield strain, e. g. > 1000 microstrain and preferably > 2500 microstrain, and is readily weldable or bondable to said central part.

3. Package according to one of the claims 1 to 2,
wherein said base part is made from one of the following materials:
- strain hardened austenitic stainless steel
- martensitic stainless steel
- precipitation hardening stainless steel
- ferritic steel
- cold rolled steel
- spring steel.

4. Package according to one of the claims 1 to 3,
wherein said central part is made from a material which is readily glass frittable, preferably annealed austenitic stainless steel.

5. Package according to one of the claims 1 to 4,
wherein said lid part is readily weldable or bondable to said central part and is preferably made from austenitic stainless steel.

6. Package according to one of the claims 1 to 5,
wherein all said base, central and lid parts are made from similar material with good resistance to oxidation and corrosion and of similar coefficient of thermal expansion (CTE.), preferably all of austenitic stainless steel.

7. Package for a strain sensor according to one of the claims 1 to 6, wherein the central part (20) comprises an electrical leadthrough which is hermetically glass fritted to the central part (20).

8. Package according to one of the claims 1 to 7, wherein the central part (20) is attached to the base part (10) by bonding or by welding.

9. Package according to one of the claims 1 to 8, wherein the package contains a SAW-substrate (28), including one or more resonators, which is bonded to the base part.

10. Package according to one of the claims 1 to 9, wherein the SAW-sensor (28) provides for the strain sensor.

11. Package according to one of the claims 1 to 10, wherein the SAW-resonator or resonators (28) are electrically connected to the leadthrough.

12. Package according to one of the claims 1 to 11, wherein the central part is attached to the lid part (30) by welding or bonding.

13. Method of producing a package for a strain sensor having a base part (10), a central part (20), a lid part (30), a leadthrough and a SAW-sensor (28) with the following steps:
- the leadthrough is glass fritted to the central part (20) providing a compression seal;
- the central part (20) is attached to the base part by bonding or by welding;
- after the central part (20) has been attached to the base part (10), the strain sensor is bonded to the base part (10);
- the strain sensor is electrically connected to the leadthrough
- finally the lid-part (30) is attached to the assembly of the base part and the central part (20).

14. Method according to claim 13, wherein the leadthrough (24.1, 24.2) is fritted to the central part (20) at a temperature in the region 800 and 1100°C, preferably between 900 and 1050 °C, most preferred between 950 and 1020°C.

15. Method according to one of the claims 13 to 14, wherein the strain sensor (28) is bonded to the base part (10) by a high strength and high glass transition temperature (Tg) adhesive.

16. Strain sensor system, comprising a package according to one of the claims 1 to 12 and a strain sensor (28) enclosed in said package and attached to said base part (10) of said package.

17. Use of a strain sensor system, according to claim 16 for one or more of the following uses:
- as a torque splitter sensor
- as a torque sensor for electric power assisted steering (EPAS)
- as a crankshaft or flexplate torque sensor
- as a transmission output torque sensor
- as a drive shaft torque sensor
- as a shear strain sensor for a range of engineering structural applications
- as a tension compression plus Poisson's ratio strain sensor for a range of engineering structural applications.
